# FASCICULE DE BREVET EUROPEEN

(11) **EP 3 039 962 B1**
(45) Date de publication et mention de la délivrance du brevet: **31.05.2017**
(21) Numéro de dépôt: 15202828.8
(22) Date de dépôt: 28.12.2015
(51) Int. Cl.: A01G 27/02

(54) **POT À RÉSERVE D'EAU POUR PLANTE**
TOPF MIT WASSERRESERVE FÜR PFLANZE
PLANT POT WITH WATER RESERVE

(30) Priorité: 29.12.2014 FR 1463363
(43) Date de publication de la demande: 06.07.2016
(73) Titulaire: Parrot Drones, 75010 Paris (FR)
(72) Inventeur: PETRY, Arthur, 75010 Paris (FR); BIHLER, Vincent, 75010 Paris (FR)
(74) Mandataire: Dupuis-Latour, Dominique

(56) Documents cités:
- DE-U1- 29 718 416
- US-B1- 6 345 470
- US-B1- 6 584 730

## Description

La présente invention concerne d'une façon générale les pots et autres récipients pour plantes, et plus précisément les pots équipés de dispositifs d'irrigation ou d'humidification de la terre.

On connaît depuis longtemps des pots de type "bac Riviera" (marque déposée) comprenant un conteneur doté en partie inférieure d'un espace formant réserve d'eau. Une plaque intermédiaire horizontale sépare le substrat de cet espace, et des éléments fibreux en contact avec le substrat trempent dans la réserve d'eau et font remonter l'eau vers la terre par capillarité. Un conduit est par ailleurs prévu sur la hauteur du pot pour remplir la réserve d'eau à partir de la région supérieure du pot.

Ce principe d'irrigation connu permet de maintenir la terre humide. Toutefois, il est extrêmement tributaire de la qualité du substrat, et donne fréquemment lieu à un excès d'humidité en partie basse du substrat, et à un défaut d'humidité en partie haute du substrat.

Ceci est généralement néfaste à la santé de la plante, induisant des phénomènes tels que pourrissement des racines, etc.

En outre, de tels pots sont extrêmement difficiles à nettoyer, impliquant en général un dépotage de la plante puis son rempotage, ce qui est problématique notamment pour les plantes d'appartement (risques de salissure, humidité du substrat, etc.).

La présente invention vise à perfectionner les pots pour plante à réserve d'eau et à proposer un pot qui :
- assure une irrigation plus propice à la santé des plantes ;
- soit facile à entretenir et à nettoyer ;
- protège efficacement les composants techniques du pot (pompe et circuit d'irrigation, circuit de commande, batterie, capteurs, etc.) ; et
- permette d'accéder aisément à l'ensemble de ces composants techniques pour intervenir facilement en cas de problème.
Selon l'invention, ce but est atteint lorsque le pot comprend l'ensemble des caractéristiques de la revendication 1. Comme le préambule de la revendication 1, le DE 297 18 416 U1 divulgue un pot à réserve d'eau du type possédant un contenant pour le substrat du végétal, un contenant pour une réserve d'eau, et des moyens pour amener de l'eau de la réserve d'eau jusqu'au substrat. Plus précisément, ce pot connu comprend :
- un contenant extérieur fermé en partie inférieure et ouvert en partie supérieure ;
- un contenant intérieur définissant une cavité pour le substrat, le contenant extérieur et le contenant intérieur définissant entre eux une cavité pour une réserve d'eau et pouvant être emboités et déboités l'un par rapport à l'autre ;
- un moyen de pompage solidaire du contenant intérieur et dont une entrée est exposée à la réserve d'eau, ledit moyen de pompage étant relié à un circuit de commande de pompage ; et
- des moyens de connexion fluidique entre une sortie du moyen de pompage et au moins un orifice d'irrigation situé en partie supérieure du contenant intérieur.

De façon caractéristique de l'invention, le contenant intérieur comprend deux éléments emboités l'un dans l'autre. L'élément intérieur du contenant intérieur définit au moins une cavité pour le moyen de pompage et le circuit de commande, et l'élément extérieur du contenant intérieur est apte à fermer au moins partiellement la ou lesdites cavités.

Certains aspects préférés mais non limitatifs du pot selon l'invention comprennent les caractéristiques suivantes, prises individuellement ou en toute combinaison que l'homme du métier appréhendera comme étant techniquement compatibles :
- le pot comprend également une soucoupe dans laquelle le contenant extérieur est apte à venir s'emboiter ;
- ladite cavité pour une réserve d'eau est de section transversale généralement annulaire ;
- un élément intérieur du contenant intérieur comprend une partie supérieure formant la cavité pour le substrat, et une partie inférieure abritant le moyen de pompage et les moyens de commande associés ;
- le pot comprend un ensemble d'orifices d'irrigation répartis à la périphérie interne du contenant intérieur ;
- les orifices d'irrigation s'étendent à partir d'une cavité annulaire définie conjointement par au moins deux éléments du pot ;
- les moyens de connexion fluidique comprennent au moins un conduit tubulaire s'étendant entre la sortie du moyen de pompage et les orifices d'irrigation via une cheminée en saillie dans la cavité pour le substrat ;
- le pot comprend au moins un canal d'évacuation d'un excès d'eau dans le substrat, s'étendant entre la cavité pour le substrat et la cavité pour la réserve d'eau.

On va maintenant décrire un exemple de mise en oeuvre de l'invention, en référence aux dessins annexés où les mêmes références désignent, d'une figure à l'autre, des éléments identiques ou fonctionnellement semblables.
La Figure 1 est une vue en élévation de côté d'un pot à réserve d'eau selon l'invention.
La Figure 2 est une vue en perspective du pot de la Figure 1.
La Figure 3 est une vue en coupe verticale généralement axiale des éléments constituant le pot, séparés les uns des autres.

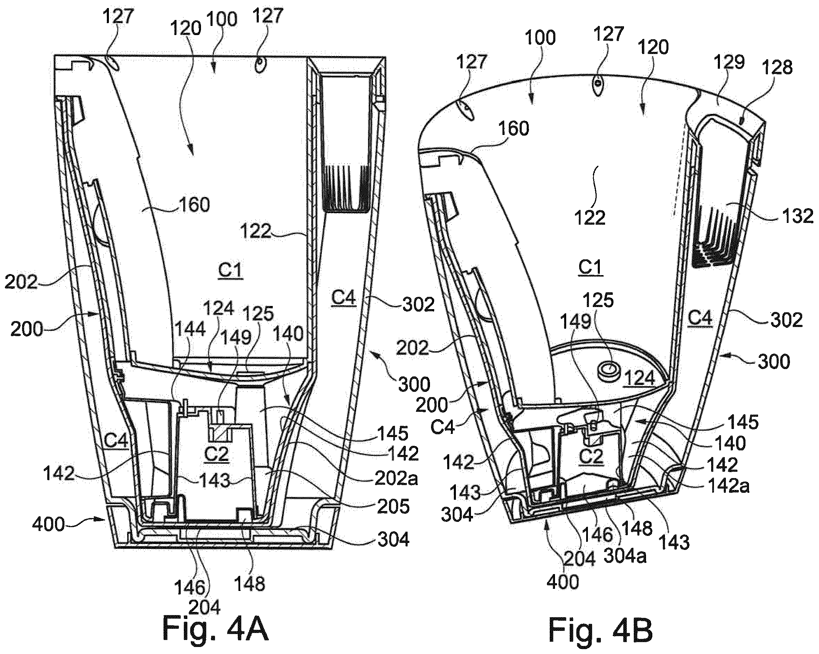

La Figure 4A est une vue en coupe verticale généralement axiale des éléments constituant le pot, assemblés.
La Figure 4B est une mise en perspective de la coupe de la Figure 4A.
La Figure 5 est une vue en coupe verticale selon un plan orthogonal au plan de coupe des Figures 4A et 4B.

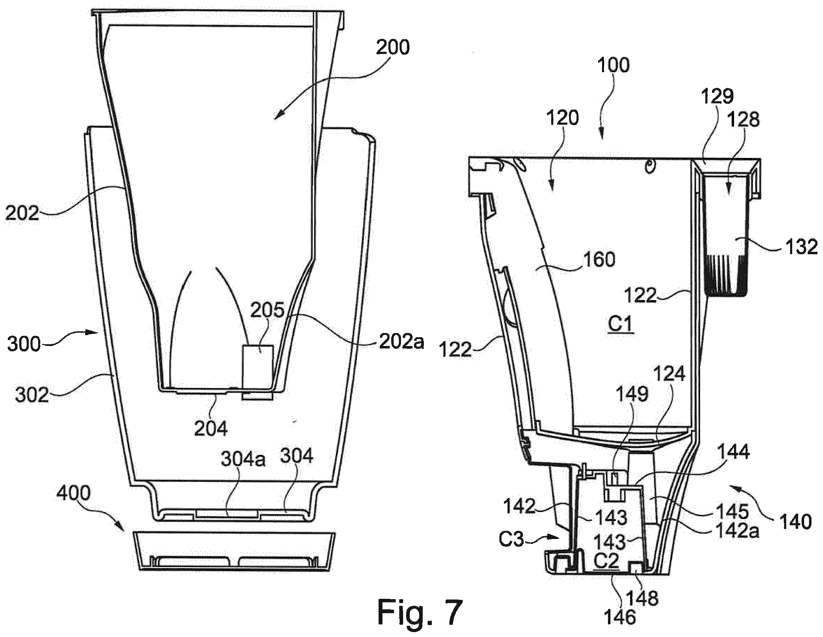

Les Figures 6 et 7 sont des vues en coupe verticale généralement axiale du pot avec ses éléments partiellement séparés et partiellement emboités, dans deux situations différentes.
La Figure 8 est une vue analogue à la Figure 4A, illustrant des moyens d'acheminement de l'eau.
La Figure 9 est une vue en perspective, partiellement en transparence, illustrant également les moyens d'acheminement de l'eau.
La Figure 10 est une vue en perspective du pot, un élément extérieur de celui-ci n'étant pas visible.

En référence aux dessins, un pot pour végétal notamment pour une plante verte ou fleurie d'intérieur, comprend principalement quatre éléments :
- un premier et un deuxième éléments 100 et 200 sont aptes à s'emboiter ensemble pour former un contenant pour un substrat (terre, sable, terreau, etc. en divers mélanges possibles) non représenté ;
- un troisième élément 300 est destiné à recevoir par emboitement à partir du haut les premier et deuxième éléments 100, 200 ;
- une coupelle 400 qui supporte l'ensemble des éléments 100, 200, 300. Ces éléments sont de préférence tous fabriqués en matière plastique injectée, mais tous autres matériaux compatibles avec leurs formes et leurs fonctions sont bien entendu possibles.

Le premier élément 100 ou élément intérieur comprend une partie principale supérieure 120 comportant une paroi latérale 122, généralement évasée vers le haut, et une paroi de fond 124.

Ces deux parois définissent une cavité C1 pour le substrat de la plante. Le premier élément 100 comprend également une partie inférieure 140 qui vient se fixer, par exemple par clipsage, au-dessous de la paroi de fond 124.

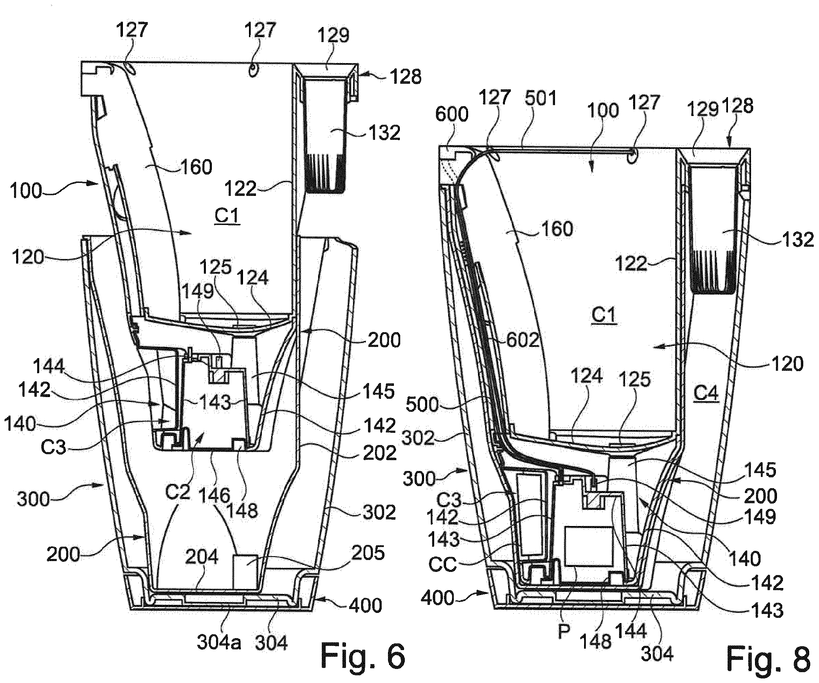

Cette partie 140 possède une paroi verticale extérieure 142, une paroi verticale intérieure 143 fermée par une paroi de dessus 144 de forme complexe, et une ouverture inférieure fermée par un capot 146, les parois 143, 144 et le capot 146 définissant ensemble une cavité C2 destinée à recevoir une pompe P, non représentée sur la plupart des figures mais illustrée schématiquement sur la Figure 8, dont le rôle et le fonctionnement seront explicités dans la suite.

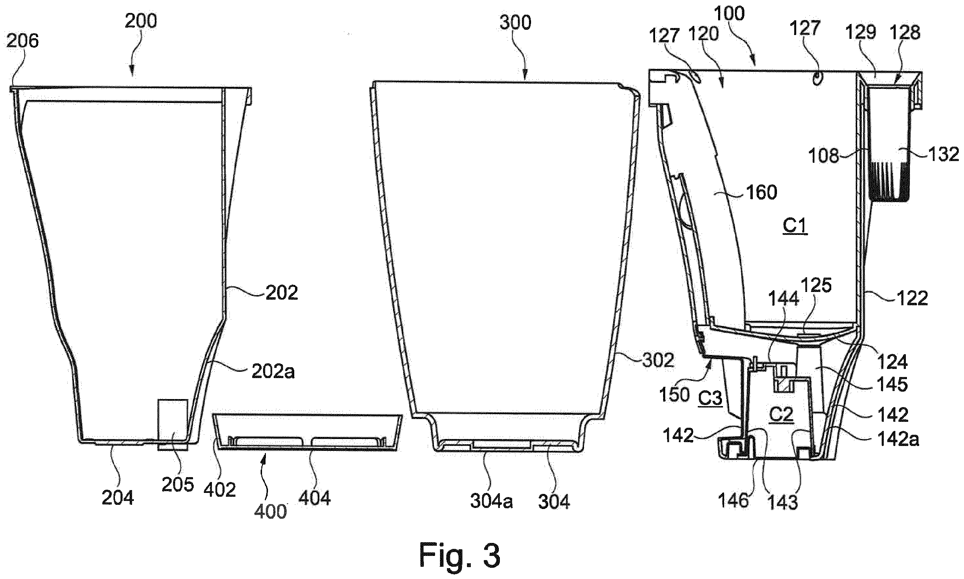

La Figure 3 illustre plus particulièrement une prise d'eau 148, incorporant le cas échéant une crépine, formée dans le couvercle 146 et située dans la région inférieure de la cavité C2, permettant l'alimentation de la pompe, et un embout 149 formé dans la paroi de dessus 144 (fond de la cavité C2) raccordé à la sortie de la pompe et connecté à un tube d'irrigation comme on le verra en détail dans la suite.

Dans la paroi de fond 124 de la partie supérieure 120 du premier élément 100 sont définies deux ouvertures 125 qui communiquent de façon étanche à l'eau avec deux canaux généralement verticaux 145 formés par la partie inférieure 140, ces canaux 145 couvrant sensiblement toute l'étendue verticale de la partie inférieure 140 et ouverts à leur extrémité supérieure et inférieure.

Une membrane perméable à l'eau mais ne laissant pas passer le substrat (non illustrée), par exemple en feutre, non-tissé, grille plastique ou métallique, etc. est placée dans les ouvertures 125 du fond 124 pour éviter que le substrat ne puisse tomber dans les canaux 145.

La partie inférieure de l'élément 100 comprend également une cavité latérale C3 définie par un renfoncement local de la paroi 142 et destinée à abriter une batterie, un circuit électronique de commande, etc., ces composants n'étant pas représentés sur la plupart des figures et étant illustrés de façon schématique (référence CC) sur la Figure 8.

L'élément 100 comprend par ailleurs une partie formant cheminée 160 s'étendant localement, dans une direction générale verticale, le long de la paroi latérale 122, du côté intérieur de celle-ci.

Cette cheminée présente une section horizontale en forme générale de U, refermée par la zone adjacente de la paroi 122, en étant fixée sur celle-ci par clipsage, collage, soudage aux ultrasons, etc.

Cette cheminée à pour fonction d'acheminer l'eau pompée par la pompe P jusque dans la région supérieure de la partie supérieure 120 de l'élément 100 par des moyens que l'on décrira dans la suite.

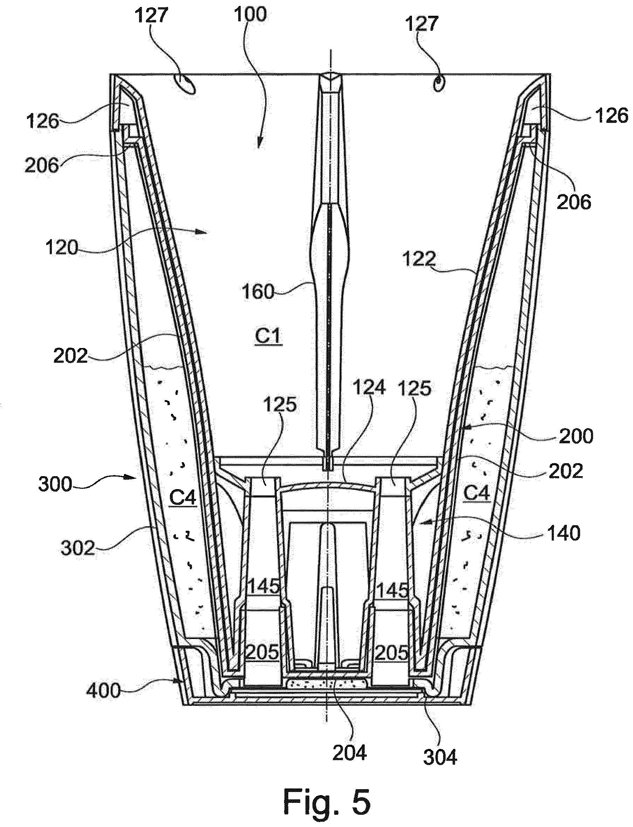

Cette région supérieure comprend un canal périphérique 126 délimité, comme le montre en particulier la Figure 5, par la région supérieure de la paroi 122, par un rebord extérieur 130 s'étendant généralement vers le bas à partir du sommet de ladite paroi 122, et enfin par une coopération entre des aménagements supérieurs d'emboitement formés dans la région supérieure de l'élément 200 et dans la région supérieure de l'élément 300. Ces aménagements comprennent notamment une collerette 206 en saillie vers l'extérieur à partir du sommet de l'élément 200. Ce canal périphérique 126 débouche dans la région supérieure de la paroi 122 formant la cavité C1 via un ensemble d'orifices 127.

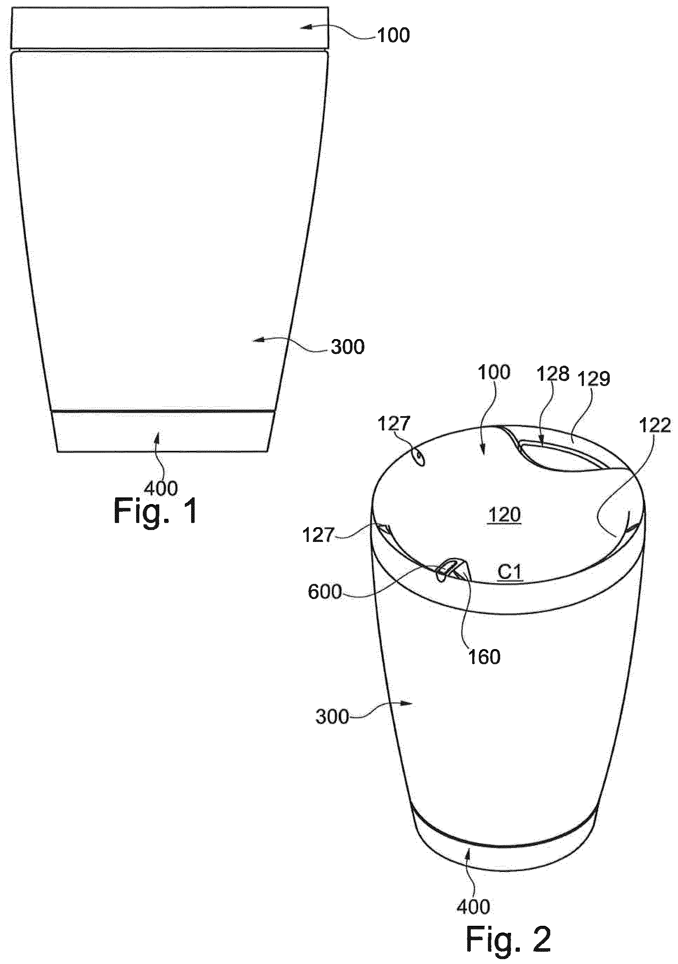

Enfin la partie supérieure 120 du premier élément 100 possède également, au niveau d'un renfoncement de la cavité C1 (voir Figure 1) un passage de remplissage 128 séparé de ladite cavité tout en étant intégré au contour généralement circulaire du pot, et destiné à accueillir, de préférence de façon amovible, un panier-filtre 132, le passage 128 et le panier-filtre 132 permettant à un utilisateur de remplir une réserve d'eau du pot, telle qu'on va la décrire dans la suite.

Ce passage 128, fermé sur lui-même, possède une partie supérieure à pans inclinés 129 formant entonnoir.

Un deuxième élément 200 du pot ou élément intermédiaire qui présente sensiblement les mêmes contours que les parties 120 et 140 du premier élément une fois assemblées, et comporte une paroi latérale 202 et une paroi inférieure 204.

En outre, deux canaux verticaux 205, ouverts en haut et en bas, sont pratiqués dans la paroi inférieure 204 et disposés en alignement des canaux 145 de la partie inférieure 140 de l'élément 100. Comme le montre notamment la Figure 5, des canaux 205 s'emboitent dans une base élargie des canaux 145, de façon étanche (par contact plastique contre plastique ou à l'aide d'un joint spécifique), la base de la cavité C1 communiquant ainsi avec le dessous de l'élément 200 via les membranes précitées.

Le premier élément 100 s'emboite étroitement dans le deuxième élément 200, avec coopération de formes comme illustré sur les figures, le deuxième élément 200 ayant pour fonctions principales de protéger les différents organes accueillis sur le premier élément 100 et de définir une paroi intérieure généralement lisse pour une réserve d'eau de section transversale généralement annulaire, telle qu'on la décrira dans la suite. Avantageusement, la coopération de formes entre les éléments 100 et 200 inclut une indexation angulaire réalisée notamment par un renfoncement localisé 202a de la paroi latérale 200 du deuxième élément, qui coopère avec un renfoncement homologue 142a formé localement dans la paroi latérale 142 de la partie inférieure 140 de l'élément 100.

Le pot comprend un troisième élément 300 ou élément extérieur qui présente une forme générale de révolution, avec une paroi latérale évasée 302 et une paroi de fond 304.

Cet élément est destiné à accueillir, ici encore par emboitement, l'ensemble formé des éléments 100, 200 en délimitant une cavité annulaire C4 formant réserve d'eau.

Cette cavité C4 débouche sur l'extérieur en partie supérieur via le panier-filtre 130, qui s'engage vers le bas dans ladite cavité, permettant ainsi le remplissage de la réserve par le haut.

La paroi de fond 304 est entièrement continue pour retenir l'eau dans la cavité C4 sans risque de fuite. Les ouvertures inférieures des canaux 145 débouchent dans la région du fond de cette cavité, immédiatement au-dessous de l'élément 200, au niveau d'un renfoncement vers le bas 304a pratiqué dans la paroi de fond 304.

Par ailleurs, on observe que la prise d'eau 148 d'alimentation de la pompe logée dans la cavité C2 se situe également au fond de la réserve d'eau.

Le pot comprend par ailleurs une soucoupe 400 possédant une paroi latérale évasée 402 et un fond 404, cette soucoupe étant destinée à recevoir par emboitement la base de l'élément 300, abritant lui-même les éléments 100 et 200.

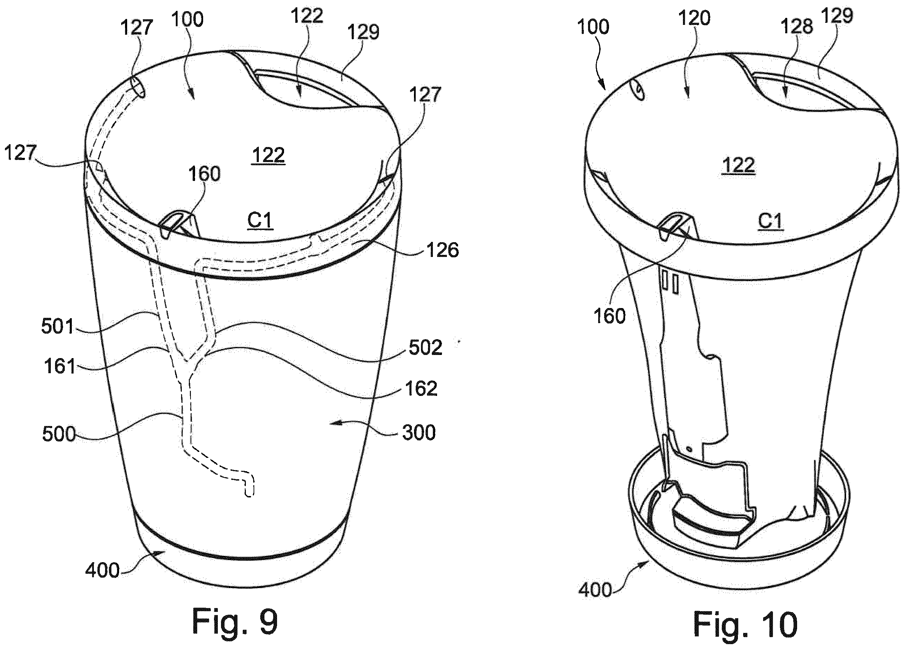

En référence maintenant aux Figures 8 et 9, on a représenté le circuit d'irrigation du substrat contenu dans la cavité C1 du pot.

Un conduit tubulaire souple ou semi-rigide 500 est raccordé à son extrémité inférieure à l'embout 140 qui appartient à la partie inférieure 140 de l'élément 100 et qui est raccordé à la sortie de la pompe.

Ce conduit s'étend à partir de là au-dessous du fond 124 de la partie supérieure en direction de la cavité C3 définie par la cheminée 160. À une hauteur intermédiaire de la cheminée 160, il se subdivise en deux tronçons 501, 502 qui ressortent de la cheminée en passant dans deux encoches 161, 162 formées latéralement dans celle-ci et qui sont connectés de façon étanche à l'eau aux orifices d'irrigation 127 pratiqués dans la partie supérieure 120 de l'élément 100 autour de la cavité C1.

Le pot peut par ailleurs être équipé des éléments complémentaires suivants :
- un système de trop-plein permettant à un excédent d'eau d'être évacué jusqu'à la soucoupe 400 ;
- une valve mécanique automatique située au niveau de la crépine de prise d'eau et permettant d'éviter que de l'eau contenue dans la pompe ne coule lorsque les éléments 100, 200 sont extraits de l'élément 300 ;
- des capteurs (capteur de lumière, capteur d'humidité dans le substrat) permettant de commander automatiquement l'irrigation en fonction de critères prédéfinis ; on a ainsi illustré sur la Figure 8 un capteur photoélectrique 600 agencé au sommet de la cheminée 160 et relié à la circuiterie de commande via un câble 602 passant par cette cheminée et traversant la paroi de fond 144 de la partie 140 de l'élément 100 ;
- un capteur de niveau d'eau dans le réservoir pour avertir de la nécessité de remplir celui-ci.

On va maintenant décrire l'assemblage et l'utilisation du pot selon l'invention, en référence aux différentes figures, qui montrent clairement la façon dont les différents éléments s'assemblent par des opérations d'emboitement très simples.

L'extraction des éléments 100, 200 de l'intérieur de l'élément 300 permet de nettoyer aisément le réservoir.

En outre, en extrayant l'élément 100 de l'élément 200, on accède facilement à l'ensemble des composants techniques du pot : pompe et circuit d'irrigation, circuit de commande, capteurs, etc. pour intervenir facilement en cas de problème.

Une fois tous les éléments assemblés, le réservoir formé par la cavité C3 est rempli via le panier-filtre 132, jusqu'à un niveau maximal qui peut être par exemple indiqué à l'intérieur du panier-filtre.

À partir ce cet instant, la crépine ou autre prise d'eau se trouve immergée dans la réserve d'eau. La carte électronique de commande actionne alors la pompe, selon la stratégie d'irrigation définie, par exemple de plusieurs fois par jours à une fois par semaine selon le type de plante (le circuit de commande pouvant être avantageusement programmé à cet effet). L'eau est acheminée vie les conduits tubulaires 500, 501, 502 jusqu'aux orifices 127, pour s'écouler dans le substrat.

Dans le cas où un excédent d'eau se trouve dans le substrat, cette eau s'écoule à travers les canaux verticaux 145, 205 via les ouvertures 125, pour retourner dans le réservoir (ou, en variante, jusque dans la soucoupe 400).

## Revendications

1. Pot à réserve d'eau pour végétal, du type possédant un contenant pour le substrat du végétal, un contenant pour une réserve d'eau, et des moyens pour amener de l'eau de la réserve d'eau jusqu'au substrat, ce pot comprenant :
- un contenant extérieur (300) fermé en partie inférieure et ouvert en partie supérieure ;
- un contenant intérieur (100, 200) définissant une cavité (C1) pour le substrat, le contenant extérieur et le contenant intérieur définissant entre eux une cavité (C4) pour une réserve d'eau et pouvant être emboités et déboités l'un par rapport à l'autre ;
- un moyen de pompage (P) solidaire du contenant intérieur et dont une entrée est exposée à la réserve d'eau, ledit moyen de pompage étant relié à un circuit de commande de pompage (CC) ; et
- des moyens (500, 501, 502) de connexion fluidique entre une sortie du moyen de pompage et au moins un orifice d'irrigation (127) situé en partie supérieure du contenant intérieur,
**caractérisé en ce que** le contenant intérieur comprend deux éléments (100, 200) emboités l'un dans l'autre, **en ce que** l'élément intérieur (100) du contenant intérieur (100, 200) définit au moins une cavité (C2, C3) pour le moyen de pompage (P) et le circuit de commande (CC), et **en ce que** l'élément extérieur (200) du contenant intérieur est apte à fermer au moins partiellement la ou lesdites cavités.

2. Le pot de la revendication 1, comprenant également une soucoupe (400) dans laquelle le contenant extérieur (300) est apte à venir s'emboiter.

3. Le pot de la revendication 1, dans lequel ladite cavité (C4) pour une réserve d'eau est de section transversale généralement annulaire.

4. Le pot de la revendication 1, dans lequel un élément intérieur (100) du contenant intérieur comprend une partie supérieure (120) formant la cavité (C1) pour le substrat, et une partie inférieure (140) abritant le moyen de pompage (P) et les moyens de commande (CC) associés.

5. Le pot de la revendication 4, comprenant un ensemble d'orifices d'irrigation (127) répartis à la périphérie interne du contenant intérieur (100, 200).

6. Le pot de la revendication 5, dans lequel les orifices d'irrigation (127) s'étendent à partir d'une cavité annulaire (126) définie conjointement par au moins deux éléments (100, 200, 300) du pot.

7. Le pot de la revendication 6, dans lequel les moyens de connexion fluidique comprennent au moins un conduit tubulaire (500, 501, 502) s'étendant entre la sortie du moyen de pompage (P) et les orifices d'irrigation (127) via une cheminée (160) en saillie dans la cavité (C1) pour le substrat.

8. Le pot de la revendication 1, comprenant au moins un canal (145, 205) d'évacuation d'un excès d'eau dans le substrat, s'étendant entre la cavité (C1) pour le substrat et la cavité (C4) pour la réserve d'eau.

## Patentansprüche

1. Topf mit Wasserreserve für Pflanze, des Typs mit einem Behälter für das Substrat der Pflanze, einem Behälter für eine Wasserreserve und Mitteln für die Zuführung von Wasser von der Wasserreserve zu dem Substrat, wobei der Topf Folgendes umfasst:
- einen äußeren Behälter (300), der im unteren Teil geschlossen und im oberen Teil offen ist;
- einen inneren Behälter (100, 200), der einen Hohlraum (C1) für das Substrat definiert, wobei der äußere Behälter und der innere Behälter zwischen einander einen Hohlraum (C4) für eine Wasserreserve definieren und relativ zueinander eingesteckt und herausgezogen werden können;
- eine Pumpeinrichtung (P), die mit dem inneren Behälter fest verbunden ist und von der ein Eingang zu der Wasserreserve exponiert ist, wobei die Pumpeinrichtung mit einem Steuerkreislauf (CC) für das Pumpen verbunden ist; und
- Mittel (500, 501, 502) für die fluidische Verbindung zwischen einem Ausgang der Pumpeinrichtung und mindestens einer Bewässerungsöffnung (127), die sich im oberen Teil des inneren Behälters befindet,
**dadurch gekennzeichnet, dass** der innere Behälter zwei Elemente (100, 200) umfasst, die ineinander gesteckt sind, dass das innere Element (100) des inneren Behälters (100, 200) mindestens einen Hohlraum (C2, C3) für die Pumpeinrichtung (P) und den Steuerkreislauf (CC) definiert und dass das äußere Element (200) des äußeren Behälters dazu eingerichtet ist, den Hohlraum oder die Hohlräume mindestens teilweise zu schließen.

2. Topf nach Anspruch 1, ferner umfassend einen Untersatz (400), in den der äußere Behälter (300) eingesteckt werden kann.

3. Topf nach Anspruch 1, wobei der Hohlraum (C4) für eine Wasserreserve einen im Allgemeinen ringförmigen Querschnitt hat.

4. Topf nach Anspruch 1, wobei ein inneres Element (100) des inneren Behälters einen oberen Teil (120) umfasst, der den Hohlraum (C1) für das Substrat bildet, und einen unteren Teil (140) umfasst, der die Pumpeinrichtung (P) und die zugeordneten Steuereinrichtungen (CC) aufnimmt.

5. Topf nach Anspruch 4, umfassend eine Anordnung von Bewässerungsöffnungen (127), die am Innenumfang des inneren Behälters (100, 200) verteilt sind.

6. Topf nach Anspruch 5, wobei die Bewässerungsöffnungen (127) sich von einem ringförmigen Hohlraum (126) aus, der durch mindestens zwei Elemente (100, 200, 300) des Topfes gemeinsam definiert ist, erstrecken.

7. Topf nach Anspruch 6, wobei die Mittel für die fluidische Verbindung mindestens eine rohrförmige Leitung (500, 501, 502) umfassen, die sich zwischen dem Ausgang der Pumpeinrichtung (P) und den Bewässerungsöffnungen (127) über einen Schacht (160) erstreckt, der in den Hohlraum (C1) für das Substrat vorspringt.

8. Topf nach Anspruch 1, umfassend mindestens einen Kanal (145, 205) für den Ablauf überschüssigen Wassers in dem Substrat, der sich zwischen dem Hohlraum (C1) für das Substrat und dem Hohlraum (C4) für die Wasserreserve erstreckt.

## Claims

1. A pot with water reserve for a plant, of the type having a container for the substrate of the plant, a container for a water reserve, and means for bringing water from the water reserve to the substrate, said pot comprising:
- an external container (300) closed in the lower part and open in the upper part;
- an internal container (100, 200) defining a cavity (C1) for the substrate, the external container and the internal container defining between each other a cavity (C4) for a water reserve and being able to be nested into and separated from each other;
- a pumping means (P) integral with the internal container and an entry of which is exposed to the water reserve, said pumping means being connected to a pumping control circuit (CC); and
- means (500, 501, 502) for fluidic connection between an exit of the pumping means and at least one irrigation orifice (127) located at the upper part of the internal container,
**characterized in that** the internal container comprises two elements (100, 200) nested into each other, **in that** the internal element (100) of the internal container (100, 200) defines at least one cavity (C2, C3) for the pumping means (P) and the control circuit (CC), and **in that** the external element (200) of the internal container is adapted to close at least partially said cavity or cavities.

2. The pot of claim 1, also comprising a dish (400) into which the external container (300) is adapted to be nested.

3. The pot of claim 1, wherein said cavity (C4) for a water reserve has a generally annular cross-section.

4. The pot of claim 1, wherein an internal element (100) of the internal container comprises an upper part (120) forming the cavity (C1) for the substrate, and a lower part (140) housing the pumping means (P) and the associated control means (CC).

5. The pot of claim 4, comprising a set of irrigation orifices (127) distributed over the internal periphery of the internal container (100, 200).

6. The pot of claim 5, wherein the irrigation orifices (127) extend from an annular cavity (126) defined jointly by at least two elements (100, 200, 300) of the pot.

7. The pot of claim 6, wherein the fluidic connection means comprise at least one tubular duct (500, 501, 502) extending between the exit of the pumping means (P) and the irrigation orifices (127) via a chimney (160) protruding into the cavity (C1) for the substrate.

8. The pot of claim 1, comprising at least one channel (145, 205) for evacuating an excess of water in the substrate, extending between the cavity (C1) for the substrate and the cavity (C4) for the water reserve.
